# EUROPÄISCHE PATENTSCHRIFT

(11) **EP 0 641 421 B1**
(45) Veröffentlichungstag und Bekanntmachung des Hinweises auf die Patenterteilung: **20.11.1996**
(21) Anmeldenummer: 93906595.9
(22) Anmeldetag: 24.03.1993
(51) Int. Cl.: F16J 15/44

(54) **SCHWIMMRINGDICHTUNG**
FLOATING-RING SEAL
JOINT D'ETANCHEITE A ANNEAU FLOTTANT

(30) Priorität: 08.04.1992 DE 4211809
(43) Veröffentlichungstag der Anmeldung: 08.03.1995
(73) Patentinhaber: KSB Aktiengesellschaft, D-67227 Frankenthal (DE)
(72) Erfinder: GAFFAL, Karl, D-67251 Freinsheim (DE)
(86) Internationale Anmeldenummer: EP9300705
(87) Internationale Veröffentlichungsnummer: WO9321464

(56) Entgegenhaltungen:
- EP-A- 0 039 435
- DE-A- 1 937 418
- US-A- 4 145 058
- US-A- 4 199 152
- US-A- 5 037 114

## Beschreibung

Die Erfindung betrifft eine Schwimmringdichtung gemäß dem Oberbegriff des Hauptanspruches.

Kreiselpumpen mit von der Pumpe getrennt angeordneter Antriebsmaschine besitzen mindestens eine Wellenabdichtung, mit deren Hilfe der Austritt eines Fördermediums aus dem Pumpeninnenraum entlang der Welle verhindert werden soll. Zusätzliche Dichtungssysteme sind im Pumpeninneren vorgesehen, um interne Verlustströme zu begrenzen.

Die üblicherweise bei Kreiselpumpen als Wellenabdichtung verwendbaren Gleitringdichtungen haben ihre Einsatzgrenze bei Gleitgeschwindigkeiten größer 50 m/sec. Ab diesem Geschwindigkeitsbereich sind die Betriebsstandzeiten sehr unbefriedigend. Bei schneller drehenden Kreiselpumpen haben sich deshalb starre, berührungsfreie Drosselspalte oder sogenannte Schwimmringdichtungen durchgesetzt. Beide Dichtungsbauarten weisen jedoch den Nachteil eines hohen Wirkungsgradverlustes auf. Versuche, Drosselspalte zwischen einem drehenden und einem rotierenden Teil so eng als möglich auszuführen, sind jedoch technische Grenzen gesetzt. Beispielsweise sind mehrstufige Kreiselpumpen mit horizontal angeordneter Welle und für die Förderung heißer Medien Betriebszuständen unterworfen, bei denen es aufgrund zu enger pumpeninterner Laufrad-Drosselspalte bei Gehäuse- oder Rotorverkrümmungen zum Blockieren des Rotors kommen kann. Zur Vermeidung dieses Problems sind sehr aufwendige Baumaßnahmen bekannt. Durch Verwendung großer Drosselspaltweiten läßt sich dieses Problem zwar umgehen, man nimmt aber dafür erhebliche Wirkungsgradverluste in Kauf.

Eine Schwimmringdichtung für Wellenabdichtungen der vorstehend genannten Art ist aus der US-PS 32 13 798 bekannt, bei der Schwimmringe in separaten Kammern angeordnet sind und die Welle mit Spiel umgeben. Somit bildet sich zwischen dem Innendurchmesser der Schwimmringe und der Welle ein Drosselspalt aus, dessen Wirkung aufgrund der Vielzahl der Drosselspalte relativ zuverlässig ist. Infolge des Druckeinflusses liegen diese Dichtringe jedoch mit einer Stirnseite reibend an ihrer Kammerwandung an, so daß bei hohen Drehzahlen mit erheblichen Verschleißproblemen zu rechnen ist. Einen ebenfalls frei in seiner Kammer angeordneten, als Laufradspaltring Anwendung findenden Schwimmring, zeigt die US-PS 37 79 667. Auch dieser Schwimmring wird aufgrund der innerhalb der Pumpe herrschenden Druckverhältnisse an seiner druckabgewandten Stirnseite an die zugehörige Gehäusewandfläche gepreßt werden. Damit ist die im Ruhezustand vorhandene berührungsfreie Beweglichkeit während des Betriebszustandes eingeschränkt. Für kleine Umfangsgeschwindigkeiten mag diese Lösung noch brauchbar sein, sie scheidet jedoch bei größeren Umfangsgeschwindigkeiten und größeren radialen Rotorschwingungen aus.

Durch die DE-A-19 37 418 ist eine Schwimmringdichtung bekannt, deren Schwimmring unter der Wirkung eines zusätzlichen Sperrmediums an einer Seitenwand einer Ausnehmung des Gehäuses anliegt. Der Schwimmring und der ihn aufnehmende Raum ist mit Druckentlastungsleitungen ausgestattet. Mit Hilfe eines zusätzlich einzuspeisenden Sperrmediums sowie einen aufwendig konstruierten Leitungssystem soll auch im Schwimmring ein Druckausgleich stattfinden. Solche Leistungssysteme sind aber anfällig gegen Verstopfungen.

Der Erfindung liegt das Problem zugrunde, ein Dichtungssystem für mit hohen Drehzahlen antreibbare Kreiselpumpen zu entwickeln, welches bei geringen Leckströmen eine hohe Standzeit sowie Unempfindlichkeit gegen Rotorverkrümmungen und -schwingungen besitzt.

Die Lösung des Problems erfolgt mit den im kennzeichnenden Teil des Hauptanspruches wiedergegebenen Merkmalen. Dieses Lösungsprinzip des im Betriebszustand frei und berührungslos beweglichen Schwimmringes kann einheitlich zwischen den rotierenden und feststehenden Pumpenbauteilen Verwendung finden, an denen Druckdifferenzen anstehen. Aufgrund der Regelspalte stellt sich jeder Schwimmring berührungslos in den ihn umgebenden Raum ein. Infolge der fehlenden Anlage ist er damit für sehr hohe Umfangsgeschwindigkeiten verwendbar. Durch die zwei zueinander im Winkel angeordneten und mit der Antriebsdrehzahl rotierenden Wandflächen sowie die diesen Flächen gegenüberliegenden, stillstehenden Flächen ergibt sich für den Schwimmring eine mittlere, ungefähr der halben Antriebsdrehzahl entsprechende Drehzahl, mit der er innerhalb seiner Kammer rotiert. Als Folge davon kann in den ungünstigen Fällen des Anlaufens bzw. Auslaufens der Maschine ein eventuelles Berühren nur mit maximal der halben Antriebsdrehzahl erfolgen. Gegenüber den bekannten Schwimmringen, bei denen die Relativgeschwindigkeit zwischen stillstehendem und drehendem Teil der Antriebsdrehzahl entspricht, ist die Verschleißbeständigkeit der erfindungsgemäßen Schwimmringe außerordentlich hoch und ermöglicht die problemlose Verwendung in hohen Drehzahlbereichen.

Die in den Ansprüchen 2 oder 3 beschriebenen Ausgestaltungen haben den Vorteil, daß damit die Regelspalte äußerst klein gehalten werden können. Dies bedeutet eine erhebliche Reduzierung der sogenannten Leckrate, wodurch der Wirkungsgrad ansteigt und sich im Endeffekt eine gravierende Verbesserung der Energiebilanz einstellt. Ein weiterer Vorteil ergibt sich beim Auftreten von Wellenverkrümmungen. Ein eventuelles Anstreifen derartig strukturierter Oberflächen hätte kaum negative Auswirkungen, da infolge der wabenartigen Oberfläche ein Verschweißen der einander berührenden Teile nicht stattfindet. Ein zusätzlicher Vorteil ergibt sich durch die sehr hohe Dämpfungswirkung derartig gestalteter Ringe, weshalb Schwingungen des rotierenden Systems sehr wirkungsvoll beeinflußt werden können. Durch die Addition der beiden radialen Spaltweiten ist eine größere Bewegungsfreiheit des Rotors gegen radiales Anstreifen gegeben.

Infolge seiner geringen Abmessungen ist der Einsatz eines einzelnen Schwimmringes als Laufradspaltring möglich. Eine Hintereinanderschaltung von mehreren Schwimmringen führt zu dessen bekannter Verwendung als Wellenabdichtung. Eine Ausgestaltung gemäß Anspruch 4 erlaubt darüber hinaus den Einsatz einer derartigen Schwimmringdichtung als Schwingungs-Dämpfungsglied innerhalb des rotierenden Systems.

Eine weitere Ausgestaltung, nach der an den Wandflächen oder an den Schwimmringstirnseiten angebrachte Vorsprünge in entsprechende Ausnehmungen der Gegenflächen eintauchen, verbessert die Verwendung des Schwimmringes als Laufradspaltring mit zusätzlichen axialen und radialen Drosselspalten bei axialen Rotorbewegungen.

Dem gleichen Zweck dienen die Ausgestaltungen der Ansprüche 6 und 7.

Ausführungsbeispiele der Erfindung sind in den Zeichnungen dargestellt und werden im folgenden näher beschrieben. Es zeigen die
- Fig. 1: in Einzeldarstellung ein Schwimmring und die in ihn umgebenden Gehäuseteile, die
- Fig. 2: ein Einbaubeispiel einer doppelten Schwimmringdichtung, die
- Fig. 3: ein Einbaubeispiel eines Laufradspaltringes, die
- Fig. 4 und 5: Einbaubeispiele bei großen Axialspielen des rotierenden Bauteiles und die
- Fig. 6: ein Einbaubeispiel als Dämpfungselement.

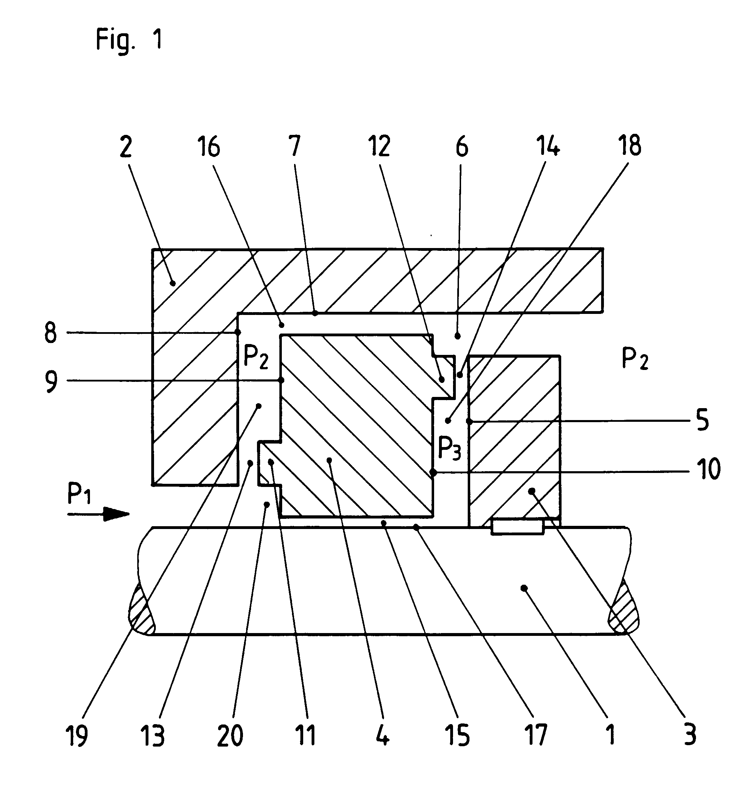

Anhand der Fig. 1 ist das Funktionsprinzip der Schwimmringdichtung dargestellt. Zwischen einem rotierenden Bauteil (1), bei dem es sich um eine Welle, Laufrad oder dgl. handeln kann, und einem feststehenden Gehäuse (2) besteht eine Druckdifferenz (P1) und (P2). Ein aufgrund der Druckunterschiede möglicher Leckstrom zwischen denen mit dem Druck (P1) bzw. (P2) beaufschlagten Räumen soll so klein wie möglich gehalten werden. Hierzu weist das rotierende Bauteil eine daran dichtend befestigte Scheibe (3) auf, deren einem Schwimmring (4) zugewandte Wandfläche (5) zusammen mit der Oberfläche des Bauteiles (1) die im Winkel zueinander angeordneten rotierenden Wandflächen eines Ringraumes (6) der Schwimmringdichtung bildet. Den rotierenden Wandflächen gegenüberliegend und im feststehenden Gehäuseteil (2) angeordnete Wandflächen (7, 8) bilden die im Winkel zueinander angeordneten stillstehenden Wandflächen des Ringraumes (6). An den Stirnseiten (9, 10) des Schwimmringes (4) sind auf unterschiedlichen Durchmessern angeordnete Vorsprünge (11, 12) angeordnet. Der der Hochdruckseite (P1) zugewandte Vorsprung (11) ist auf kleinerem Durchmesser angeordnet und bildet einen Regelspalt (13), während der der Niederdruckseite (P2) zugekehrte Vorsprung (12) zusammen mit der Wandfläche (5) einen auf größerem Durchmesser liegenden Regelspalt (14) bildet. Des weiteren bildet der im Ringraum (6) frei beweglich angeordnete Schwimmring (4) mit seinem Innendurchmesser zum rotierenden Bauteil (1) einen axial durchflossenen Drosselspalt (15) und mit seinem Außendurchmesser zur Gehäusewand (7) den axial durchflossenen Drosselspalt (16). Die Vorsprünge (11, 12) können auch als Bestandteil der Wandflächen (5) bzw. (8) ausgebildet sein.

Durch die Anordnung der Regelspalte (13, 14) und der Drosselspalte (15, 16) wird sich der Schwimmring (4) beim Vorhandensein einer Druckdifferenz (P1) > (P2) berührungsfrei zwischen den Wandflächen (8, 5) einstellen. Infolge der hydrodynamischen Wirkung des durch die Drosselspalte (15, 16) strömenden geringen Leckstromes wird der Schwimmring (4) auch in radialer Richtung berührungsfrei getragen werden. Durch die rotierenden Wandflächen (5) und (17), wobei letztere die Oberfläche des rotierenden Bauteiles darstellt, wird der Schwimmring (4) eine Drehzahl annehmen, welche ungefähr der halben Drehzahl des rotierenden Bauteiles (1) entspricht. Die Ursache dafür sind die Antriebsmomente der rotierenden Wandflächen und die Bremsmomente der stillstehenden Wandflächen. Die axiale Berührungsfreiheit ergibt sich durch einen automatisch einstellenden Gleichgewichtszustand der Druck- und Flächenprodukte in den Räumen (18, 19).

Für den Grenzfall, daß der Regelspalt (14) gegen Null geht, wird der Druck im Raum (18) ungefähr dem Druck (P1) entsprechen und damit größer sein als der Druck in dem Raum (19), welcher ungefähr dem niedrigen Druck (P2) entspricht. Als Folge hiervon wird der Schwimmring (4) in axialer Richtung nach links zur Wandfläche (8) verschoben und damit der Regelspalt (14) geöffnet. Im gegenteiligen Fall, bei dem der Regelspalt (13) gegen Null geht, herrscht im Raum (20) der hohe Druck (P1), während im Raum (18) ein niedrigerer Druck ansteht, welcher ungefähr dem Druck (P2) entspricht. Dadurch verschiebt sich der Schwimmring in axialer Richtung nach rechts zur Wandfläche (5) hin, so daß sich der Regelspalt (13) öffnet. Während des Betriebes stellt sich somit automatisch eine Berührungsfreiheit des Schwimmringes (4) und damit auch eine Verschleißfreiheit ein.

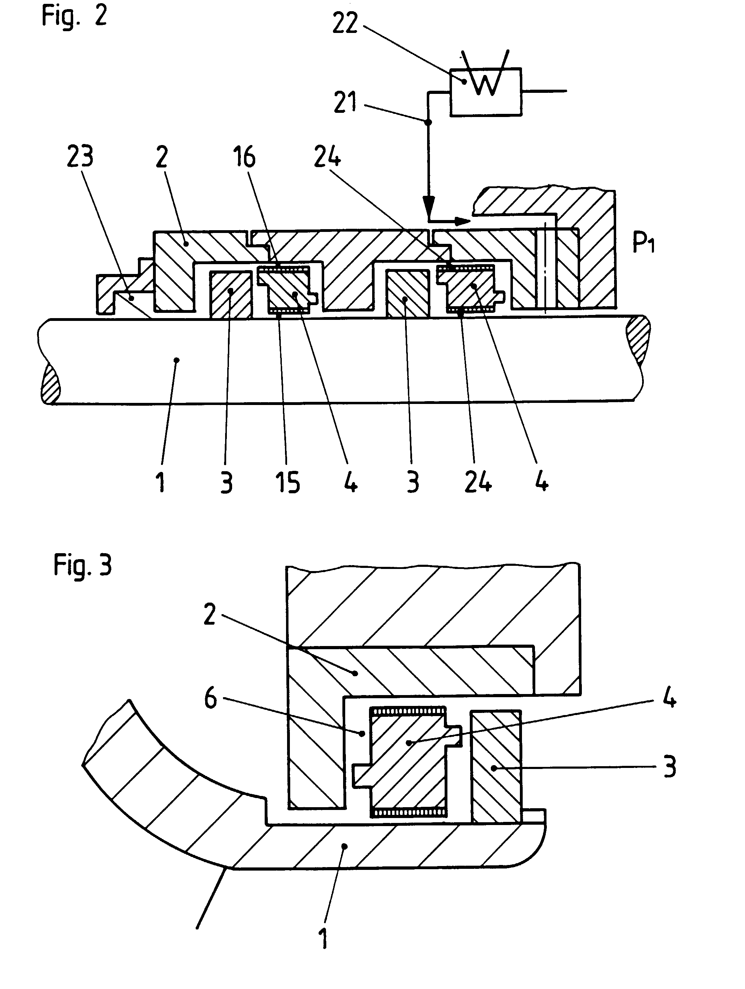

Die Fig. 2 zeigt eine zweistufige Ausführung der Schwimmringdichtung, welche beispielsweise am Gehäuseende eines Kreiselpumpengehäuses angebracht werden kann. Die Zweistufigkeit wurde hier aus Vereinfachungsgründen und der Überschaubarkeit der zeichnerischen Darstellung gewählt. Sie kann jedoch ohne weiteres auch in Abhängigkeit von den abzusperrenden Druckdifferenzen erhöht werden. Die Hochdruckseite (P1) kann hierbei dem Pumpenenddruck entsprechen. Zur Leckstromkühlung eines heißen Fördermediums ist diese Schwimmringdichtungsbauart mit einem Sperrwasserstrom (21) beaufschlagt, welcher beispielsweise der ersten Pumpenstufe entnommen werden kann und mittels eines Wärmetauschers (22) auf ein erträgliches Maß reduziert wird. Während des Betriebes sorgen die frei schwimmenden und sich selbst einstellenden Schwimmringe (4) für einen minimalen Leckstrom. Im Stillstand der Anlage verhindert eine Stillstandsdichtung (23) einen Flüssigkeitsaustritt. Infolge der auf die Schwimmringe (4) einwirkenden Bremsmomente durch die stillstehenden Wandflächen wird dieser eine Drehzahl einnehmen, die immer kleiner als die des rotierenden Teiles (1) ist. Somit ergeben sich Relativgeschwindigkeiten zwischen den Teilen, welche deutlich niedriger als bei den bekannten Systemen sind. Dies stellt einen wesentlichen Vorteil im Hinblick auf Werkstoffprobleme von denjenigen Teilen dar, die mit engem Spalt gegeneinander bewegt werden. Zur Reduzierung des durch die Drosselspalte (15, 16) fließenden Mediums sind die Schwimmringe (4) mit einer nach außen offenen, wabenartigen Oberflächenstruktur (24) ausgerüstet.

Die Fig. 3 zeigt ein Ausführungsbeispiel, bei dem das rotierende Teil (1) Bestandteil eines Laufradhalses eines Kreiselpumpenlaufrades ist. Mit diesem rotiert eine Scheibe (3). Den rotierenden Teilen gegenüber liegt das stillstehende Wandflächen aufweisende Gehäuse (2). Zwischen den Teilen ist der Ringraum (6) ausgebildet, innerhalb dessen der Schwimmring (4) in seiner Funktion als Laufradspaltring gemäß den vorstehenden Ausführungen frei beweglich angeordnet ist.

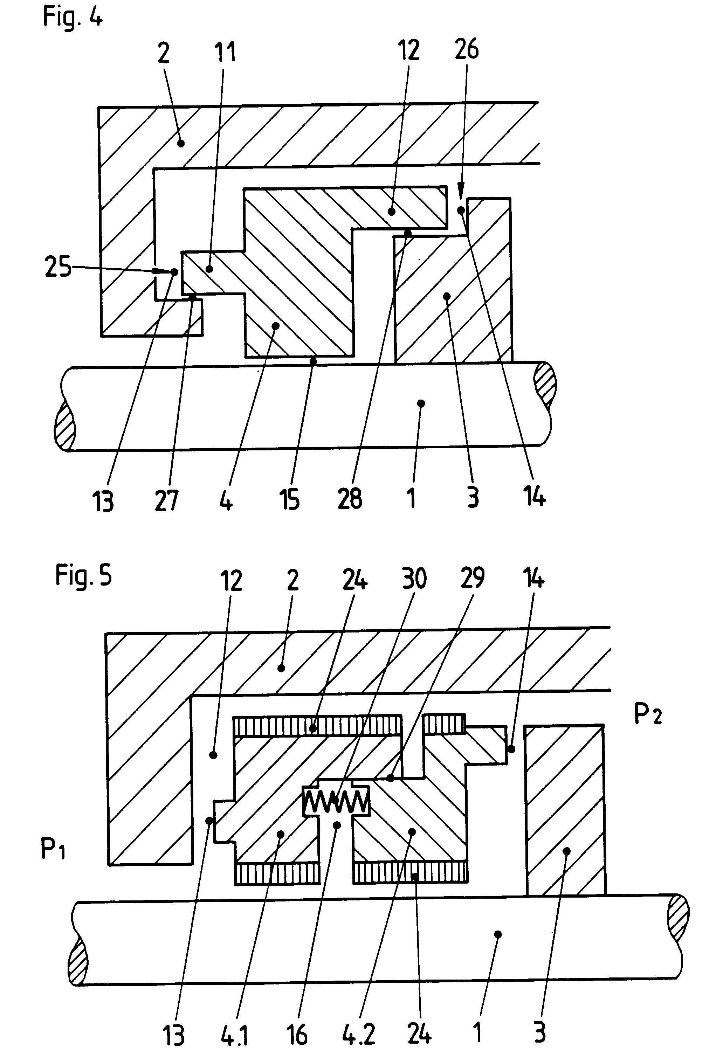

Das Ausführungsbeispiel der Fig. 4 berücksichtigt Betriebsbedingungen speziell bei Kreiselpumpen. Deren rotierende Bauteile unterliegen größeren axialen Bewegungen, die bedingt sind durch das Lagerspiel der Axiallager, Montage- und Fertigungstoleranzen sowie Wärmeausdehnungen. Um sehr große axiale Bewegungen auszugleichen, müßten die in der Fig. 1 beschriebenen Regelspalte (13, 14) verhältnismäßig groß ausgeführt werden. Dies läßt sich durch die Ausführungsform der Fig. 4 vermeiden. Die Vorsprünge (11, 12) des Schwimmringes (4) greifen hierbei in Ausnehmungen (25) des Gehäuses (2) sowie (26) der rotierenden Scheibe (3) ein. Die Regelspalte (13, 14) sind axial vergrößert und diesen sind zusätzlich axial durchflossene, bei einer axialen Verschiebung des Schwimmringes (4) sich in ihrer Länge verändernde Regelspalte (27, 28) vorgeschaltet. Diese Maßnahme erlaubt bei axialen Verschiebungen des rotierenden Teiles mit der daran befestigten Scheibe (3) einen Ausgleich dieser Verschiebung bei gleichzeitiger Begrenzung des Leckstromes. Selbstverständlich sind die Abmessungen so gewählt, daß bei einer maximalen axialen Verschiebung die Regelspalte (27, 28) erhalten bleiben und bei der geringsten axialen Verschiebung kein Anlaufen des Schwimmringes (4) an den ihn begrenzenden Wandflächen erfolgt. Die Funktionsweise entspricht der in Fig. 1 beschriebenen Ausführung.

Das Ausführungsbeispiel der Fig. 5 verwendet anstatt der zusätzlichen Regelspalte (27, 28) gemäß Fig. 4 einen zweiteilig ausgebildeten Schwimmring (4.1, 4.2). Eine Schiebesitzpassung (29) sowie ein Federelement (30) zwischen den Schwimmringteilen (4.1, 4.2) ermöglicht eine Kompensation von zu großen axialen Veränderungen. Das Federelement (30) kann als ein einstückiges Bauteil oder als über den Umfang verteilt angeordnete Federelemente ausgebildet sein. Die Stärke des oder der Federelemente (30) wird den jeweils abzusperrenden Druckverhältnissen angepaßt. Infolge der Relativbewegung der Schwimmringteile (4.1, 4.2) zueinander ist es möglich, große axiale Relativbewegungen zuzulassen und trotzdem die Regelspalte (13, 14) klein zu belassen, um somit den Leckstrom zwischen den Räumen (P1) und (P2) so klein wie möglich zu halten. Die Leckstromreduzierung unterstützt hierbei die wabenartige Oberflächenstruktur (24).

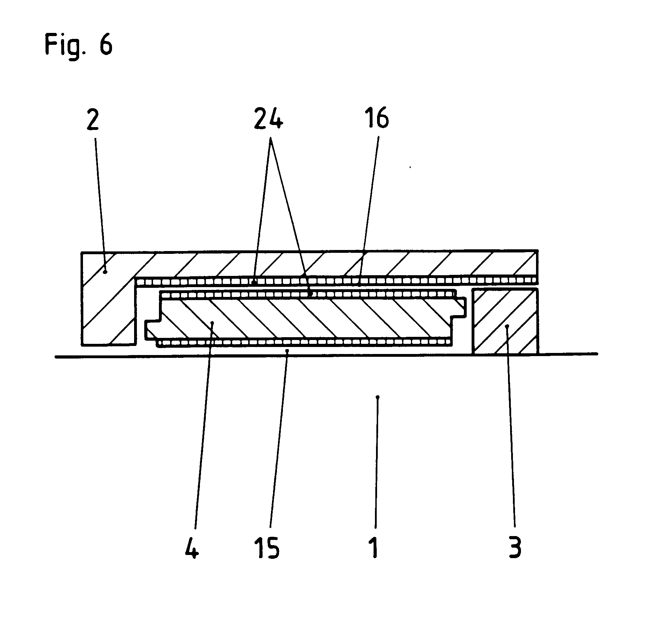

Das Ausführungsbeispiel der Fig. 6 zeigt einen Schwimmring (4), dessen Länge ein Vielfaches seiner Höhe beträgt. Die wabenartige Oberflächenstruktur ist hierbei auch im Gehäuse (2) auf der dem Schwimmring (4) zugekehrten Seite angebracht. Aufgrund seiner großen Länge und der in Achsrichtung durchströmten langen Drosselspalte (15, 16) wirkt dieser Schwimmring sehr stark schwingungsdämpfend auf das rotierende System ein. Bei vielstufigen Pumpen mit einer großen axialen Erstreckung kann damit das gesamte Schwingungsverhalten des rotierenden Teiles positiv beeinflußt werden.

## Patentansprüche

1. Schwimmringdichtung zur Abdichtung eines rotierenden Bauteiles und angeordnet zwischen zwei unterschiedlich beaufschlagten Druckräumen, mit einem oder mehreren Schwimmringen, wobei jeder Schwimmring in einem mit jeweils zwei einander gegenüberliegenden Wandflächen versehenen Ringraum angeordnet ist und die Wandflächen in radialen und axialen Ebenen angeordnet sind, **dadurch gekennzeichnet**, daß zwei zueinander im Winkel angeordnete Wandflächen (5, 17) mit der Drehzahl des rotierenden Bauteiles (1) rotieren, daß die diesen gegenüberliegenden Wandflächen (7, 8) stillstehend ausgebildet sind, daß zwischen stillstehenden und rotierenden Wandflächen durchströmte Dichtspalte angeordnet sind, daß jeder Schwimmring (4) frei beweglich in einem von den Wandflächen (5, 7, 8, 17) umhüllten Ringraum (6) angeordnet ist, wobei zwischen den Stirnseiten (9, 10) des Schwimmringes (4) und den den Stirnseiten (9, 10) gegenüberliegenden Wandflächen (5, 8) Regelspalte (13, 14; 27, 28) ausgebildet sind und daß die Regelspalte (13, 14; 27, 28) auf unterschiedlichen Durchmessern angeordnet sind.

2. Schwimmringdichtung nach Anspruch 1, dadurch gekennzeichnet, daß die äußeren und/oder inneren Umfangsflächen des Schwimmringes (4) mit einer offenen, wabenartigen Oberflächenstruktur (24) versehen sind.

3. Schwimmringdichtung nach den Ansprüchen 1 und 2, dadurch gekennzeichnet, daß die den äußeren und/oder inneren Umfangsflächen des Schwimmrings (4) gegenüberliegenden Wandflächen mit einer offenen, wabenartigen Oberflächenstruktur (24) versehen sind.

4. Schwimmringdichtung nach einem der Ansprüche 1 bis 3, dadurch gekennzeichnet, daß der Querschnitt eines als Schwingungsdämpfer verwendbaren Schwimmringes (4) eine in Achsrichtung meßbare Länge aufweist, die mindestens dem Dreifachen der Schwimmringhöhe entspricht.

5. Schwimmringdichtung nach den Ansprüchen 1 bis 4, dadurch gekennzeichnet, daß an den Wandflächen (5, 8) oder an den Schwimmring-Stirnseiten (9, 10) angebrachte Vorsprünge (11, 12) in entsprechende Ausnehmungen (25, 26) der Gegenflächen eintauchen.

6. Schwimmringdichtung nach den Ansprüchen 1 bis 5, dadurch gekennzeichnet, daß der Schwimmring (4.1, 4.2) zweiteilig und in sich axial verschiebbar ausgebildet ist.

7. Schwimmringdichtung nach Anspruch 6, dadurch gekennzeichnet, daß die Schwimmringhälften (4.1, 4.2) durch ein oder mehrere Federn (30) auseinanderdrückbar sind.

## Claims

1. A floating ring seal for sealing off a rotary component, said seal being arranged between two pressure spaces subject to different pressures, comprising one or more floating rings, each floating ring being arranged in an annular space having mutually opposite wall surfaces arranged in radial and axial planes, characterized in that two wall surfaces (5 and 17) arranged at an angle to one another rotate at the speed of rotation of the rotary component (1), in that the wall surfaces (7 and 8) opposite to them are designed to be stationary, in that between stationary and rotary wall surfaces flow conducting sealing gaps are arranged, in that each floating ring (4) is arranged in a freely movable manner in an annular space (6) enclosed by the wall surfaces (5, 7, 8 and 17), regulating gaps (13, 14; 27 and 28) being formed between the terminal sides (9 and 10) of the floating ring (4) and wall surfaces (5 and 8) opposite to the terminal sides (9 and 10) and in that the regulating gaps (13, 14; 27 and 28) are arranged at different diameters.

2. The floating ring seal as claimed in claim 1, characterized in that the external and/or internal peripheral surfaces of the floating ring (4) are provided with an open, honeycomb-like surface structure (24).

3. The floating ring seal as claimed in claim 1 and in claim 2, characterized in that the wall surfaces opposite to the external and/or internal peripheral surfaces of the floating ring (4) are provided with an open, honeycomb-like surface structure (24).

4. The floating ring seal as claimed in any one of the claims 1 through 3, characterized in that the cross section of a floating ring (4) adapted to be employed as a vibration damper possesses a length able to be measured in the axial direction and equal to at least three times the height of the floating ring.

5. The floating ring seal as claimed in any one of the claims 1 through 4, characterized in that projections (11 and 12) arranged on the wall surfaces (5 and 8) or on the terminal surfaces (9 and 10) of the floating ring extend into corresponding recesses (25 and 26) in the complementary surfaces.

6. The floating ring seal as claimed in any one of the claims 1 through 5, characterized in that the floating ring (4.1 and 4.2) is designed in two parts and is able to be slid axially.

7. The floating ring seal as claimed in claim 6, characterized in that the floating ring halves (4.1 and 4.2) are arranged to be thrust apart by one or more springs (30).

## Revendications

1. Joint annulaire flottant pour l'étanchéité d'un élément de construction rotatif et placé entre deux chambres de pression soumises à des pressions différentes, avec une ou plusieurs bagues flottantes, dans lequel chaque bague flottante est placée dans une chambre de bague munie de deux parois opposées, les parois étant placées sur des plans radiaux et axiaux, **caractérisé** en ce que deux parois (5, 17) placées en angle l'une par rapport à l'autre tournent à la vitesse de l'élément de construction tournant (1), que les parois (7, 8) qui leur font face sont fixes, que des fentes d'étanchéité traversées par le fluide sont placées entre les parois fixes et les parois rotatives, que chaque bague flottante (4) est placée dans une chambre de bague (6) entourée par les parois (5, 7, 8, 17) et peut s'y mouvoir librement, des fentes de régulation (13, 14; 27, 28) étant formées entre les parois frontales (9, 10) de la bague flottante (4) et les parois (5, 8) opposées aux parois frontales (9, 10) et les fentes de régulation (13, 14; 27, 28) étant placées sur différents diamètres.

2. Joint annulaire flottant selon la revendication 1 caractérisé en ce que les surfaces périphériques externes et/ou internes de la bague flottante (4) sont munies d'une structure (24) superficielle ouverte en forme de nids d'abeilles.

3. Joint annulaire flottant selon les revendications 1 et 2 caractérisé en ce que les parois opposées aux surfaces périphériques externes et/ou internes de la bague flottante (4) sont munies d'une structure (24) superficielle ouverte en forme de nids d'abeilles.

4. Joint annulaire flottant selon l'une des revendications 1 à 3 caractérisé en ce que la section d'une bague flottante (4) utilisable comme amortisseur d'oscillations présente une longueur mesurable dans le sens axial qui est au mois le triple de la hauteur de la bague flottante.

5. Joint annulaire flottant selon les revendications 1 à 4 caractérisé en ce que des saillies (11, 12) montées sur les parois (5, 8) ou sur les parois frontales (9, 10) de la bague flottante pénètrent dans des creux (25, 26) correspondants de la paroi opposée.

6. Joint annulaire flottant selon les revendications 1 à 5 caractérisé en ce que la bague flottante (4.1, 4.2) est en deux pièces et déplaçable dans le sens axial.

7. Joint annulaire flottant selon la revendication 6 caractérisé en ce que les moitiés de bague flottante (4.1, 4.2) peuvent être écartées l'une de l'autre à l'aide d'un ou de plusieurs ressorts (30).
